# FASCICULE DE BREVET EUROPEEN

(11) **EP 0 479 648 B1**
(45) Date de publication et mention de la délivrance du brevet: **01.05.1996**
(21) Numéro de dépôt: 91402557.2
(22) Date de dépôt: 25.09.1991
(51) Int. Cl.: G05B 19/18

(54) **Procédé de réglage automatique de l'effort de coupe appliqué par un robot d'usinage à un outil, par exemple pour ébavurer une arête sur une pièce**
Verfahren zur automatischen Regelung der Schneidkraft die von einem Industrieroboter auf ein Werkzeug ausgeübt wird, z.B. zum Abgraten von Kämmen auf einem Werkstück
Method for automatic control of a cutting force applied to a tool by a tool robot, for example to debure chamfer on a workpiece

(30) Priorité: 02.10.1990 FR 9012123
(43) Date de publication de la demande: 08.04.1992
(73) Titulaire: AUTOMOBILES PEUGEOT, F-75116 Paris (FR); AUTOMOBILES CITROEN, F-92200 Neuilly sur Seine (FR)
(72) Inventeur: Pitet, Yves, F-77000 Melun (FR)
(74) Mandataire: Durand, Yves Armand Louis

(56) Documents cités:
- EP-A- 0 331 265
- EP-A- 0 336 342
- EP-A- 0 359 378
- EP-A- 0 364 057
- DE-A- 3 800 752
- US-A- 4 812 614

## Description

La présente invention se rapporte aux techniques d'usinage et plus particulièrement à un procédé de réglage automatique de l'effort de coupe à appliquer à un outil tel qu'un outil de coupe, monté sur un bras de robot d'usinage et déplacé par celui-ci suivant une trajectoire d'avance à l'usinage, par exemple pour ébavurer une arête sur une pièce.

Lors de la réalisation, par exemple par moulage, de pièces de formes diverses, il peut apparaître des bavures sur la pièce, notamment au niveau des arêtes et/ou des plans de joint du moule. Ces bavures sont inesthétiques et peuvent être gênantes pour un montage précis de la pièce, par exemple sur un véhicule automobile. Il convient donc d'éliminer ces bavures en les usinant à l'aide d'un outil.

On connaît depuis longtemps de tels procédés d'évaburage, et certains de ceux-ci sont effectués à l'aide d'automates programmables tels que des robots d'usinage. Les robots couramment employés pour effectuer ces travaux d'ébavurage comportent un bras articulé sur lequel est monté un outil de coupe, le bras déplaçant automatiquement l'outil de coupe suivant une trajectoire d'avance à l'usinage, par exemple suivant le profil de l'arête à ébavurer, alors que l'outil usine les bavures qui font saillie de cette arête.

Cependant, les procédés usuels d'ébavurage ne prennent pas en compte le profil réel de l'arête. En d'autres termes, les paramètres d'usinage tels que l'effort de coupe sont constants sur toute la trajectoire d'avance à l'usinage, que la pièce présente ou non des bavures, et quelle que soit l'importance de celles-ci. De tels procédés sont coûteux et lents puisqu'ils ne permettent pas d'augmenter la vitesse d'avance de l'outil dans les zones ne présentant pas de bavures, et obligent par conséquent à régler les paramètres de coupe en fonction des bavures les plus importantes qui peuvent apparaître sur la pièce.

On connaît déjà d'après le document EP-A-0 364 057 un système de contrôle d'une machine-outil, conforme au préambule de la revendication 1 donnée en annexe.

On connaît également d'après le document DE-A-3 800 752, un procédé de soudage dans lequel on analyse un cordon de soudure préformé pour modifier les conditions de soudage ultérieures, ainsi qu'un procédé de scellement dans lequel on analyse un cordon d'étanchéité en vue de modifier les conditions de scellement ultérieures. Mais ces techniques sont très éloignées du domaine de l'invention et visent un contrôle a posteriori.

Le but de la présente invention est de remédier à ces inconvénients en proposant un procédé de réglage automatique de l'effort de coupe à appliquer à un outil monté sur le bras d'un robot. Avec le procédé conforme à l'invention, l'opération d'ébavurage d'une pièce peut être effectuée de façon plus rapide et précise, et par conséquent à moindre coût. De plus, ce procédé fait appel à des équipements pouvant être aisément installés sur le bras d'un robot existant, et qui sont d'un fonctionnement rapide et qui n'altèrent par les pièces à usiner.

A cet effet, l'invention a pour objet un procédé de réglage automatique de l'effort de coupe à appliquer à un outil monté sur un bras d'un robot et déplacé par celui-ci suivant une trajectoire d'avance à l'usinage, par exemple pour ébavurer une arête sur une pièce, ledit réglage consistant à effectuer une analyse de la structure réelle de la pièce à usiner, calculer d'après l'analyse effectuée un effort de coupe approprié au profil à usiner, et régler les paramètres de déplacement de l'outil en fonction de l'effort de coupe ainsi calculé, caractérisé en ce qu'il comprend les étapes consistant à :
a) éclairer la pièce à usiner avec un faisceau lumineux produit par un émetteur laser, le faisceau ayant la forme d'un plan laser et balayant la pièce de part et d'autre de la trajectoire d'avance à l'usinage;
b) réaliser une image de la trace du plan laser sur la pièce à l'aide d'une caméra, afin de visualiser le profil à usiner de la pièce; et
c) analyser l'image obtenue à l'étape (b) pour détecter la présence d'éventuelles bavures sur le profil.

Le procédé conforme à l'invention est caractérisé en ce que, le profil à usiner de la pièce étant une arête le long de laquelle peuvent se trouver des bavures à usiner, l'émetteur laser et la caméra sont orientés suivant des axes moyen de balayage et de mire respectivement, qui sont concourants en un point de l'arête dit point de mire.

L'invention est encore caractérisée en ce que l'axe de mire de la caméra est compris dans le plan bissecteur de l'arête, afin de pouvoir visualiser de façon égale chacune des faces de l'arête.

On précisera encore ici que l'axe de mire de la caméra et la projection de l'axe moyen de balayage sur le plan bissecteur forment un angle non nul et dit de mise en relief.

Le procédé se caractérise encore en ce que ledit angle de mise en relief est compris entre 30 et 60°, et est de préférence de l'ordre de 45°.

De plus, le procédé est caractérisé en ce que l'axe de l'émetteur laser et le plan bissecteur de l'arête forment un angle non nul et dit de contraste, afin de créer une zone d'ombre sur la face de l'arête qui est opposée à cet angle si une bavure est présente au point de mire.

Il convient de noter ici que l'angle de contraste projeté sur un plan perpendiculaire à l'arête est compris entre 1 et 10°, et est de préférence de l'ordre de 5°.

Le procédé conforme à l'invention se caractérise en ce qu'un plan de référence est défini par un premier et un second axes de référence qui se croisent au point de mire, ledit premier axe de référence étant confondu avec l'arête et orienté dans le sens de l'avance à l'usinage, le deuxième axe de référence étant perpendiculaire d'une part audit premier axe et d'autre part au plan bissecteur, et la trace du plan laser sur ledit plan de référence s'étendant dans le quadrant défini par lesdits axes de référence.

L'invention est encore caractérisée en ce que le deuxième axe de référence est orienté vers l'extérieur de la pièce et s'étend d'un côté du plan bissecteur qui présente une majorité des bavures à usiner.

Conformément à l'invention, la trace du plan laser sur ledit plan de référence et le deuxième axe de référence forment un angle dit d'anticipation et qui est de l'ordre de 30°.

Il convient de noter ici que la caméra et l'émetteur laser sont montés sur le bras du robot, à proximité de l'outil et en avant de celui-ci par rapport à son sens de déplacement.

Le procédé conforme à l'invention est en outre caractérisé en ce que l'axe de mire est incliné dans le plan bissecteur d'un angle dit de mire, de manière à pouvoir observer un point situé au droit de l'outil ou immédiatement en avant de celui-ci, dans le sens de l'avance à l'usinage.

Le procédé conforme à l'invention est caractérisé en ce qu'il comprend une étape (e) supplémentaire, qui consiste à augmenter l'effort de coupe lorsque l'image observée par la caméra est différente d'une image prédéterminée correspondant au profil de l'arête en l'absence de bavures.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue en perspective d'un robot équipé et programmé pour exécuter le procédé d'usinage conforme à l'invention.

La figure 2 est une vue schématique et en perspective d'une arête de la pièce à usiner visible sur la figure 1, et illustrant le positionnement, par rapport à l'arête, d'une caméra et d'un émetteur laser nécessaires à l'exécution du procédé conforme à l'invention.

Les figures 3 à 5 sont des vues de plans de référence permettant de définir le positionnement d'axes et de plans, conformément à l'invention.

La figure 6 est un tableau explicatif du procédé, dans différents cas d'orientation des bavures à usiner.

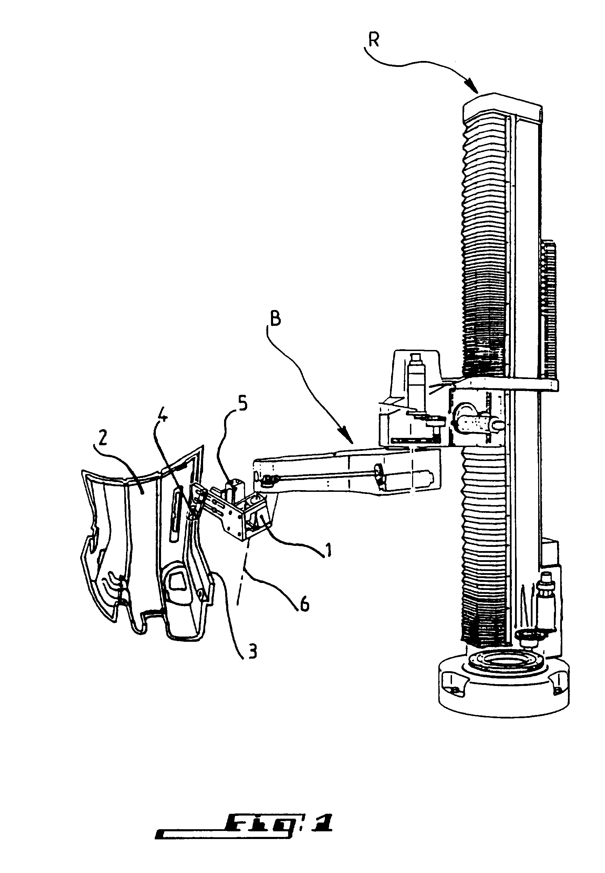

En se reportant tout d'abord à la figure 1, on voit qu'un robot R comporte un bras B articulé sur le corps du robot R, à l'extrémité libre duquel est monté un porte-outil 1. Le porte-outil 1 est monté pivotant par rapport à une pièce à usiner répérée en 2, de façon à pouvoir déplacer, suivant une trajectoire d'avance à l'usinage déterminée, un outil d'usinage, représenté ici par son axe de travail 6. Cet outil 6 peut être d'un type quelconque tel qu'une meule, une fraise ou autres. Dans l'exemple illustré sur la figure 1, la pièce à usiner est un pare-chocs 2 de véhicule automobile en matériau plastique moulé, représenté partiellement, et la trajectoire d'avance à l'usinage suit une arête 3 que l'on désire ébavurer.

Avant de décrire avec précision le procédé de réglage automatique proprement dit, il convient de définir les équipements nécessaires à l'exécution de ce procédé, ainsi que leurs positions sur le porte-outil 1 et par rapport à la pièce 2.

Conformément à l'invention, on a prévu sur le porte-outil 1 un émetteur de faisceau laser 4 et une caméra 5 du type matricielle, et de préférence équipée d'un filtre accordé sur la fréquence du laser. L'utilisation d'un émetteur laser comme source lumineuse a pour avantage que l'éclairage obtenu est insensible aux variations de luminosité dans l'environnement où l'on exécute le procédé, comme par exemple les variations de l'éclairage ou de la lumière naturelle d'un atelier.

On n'a pas représenté sur les figures un ordinateur de commande des déplacements du bras B du robot R, et qui est également connecté à la caméra 5 et à l'émetteur laser 4 pour échanger avec ceux-ci des informations nécessaires à l'exécution du procédé conforme à l'invention.

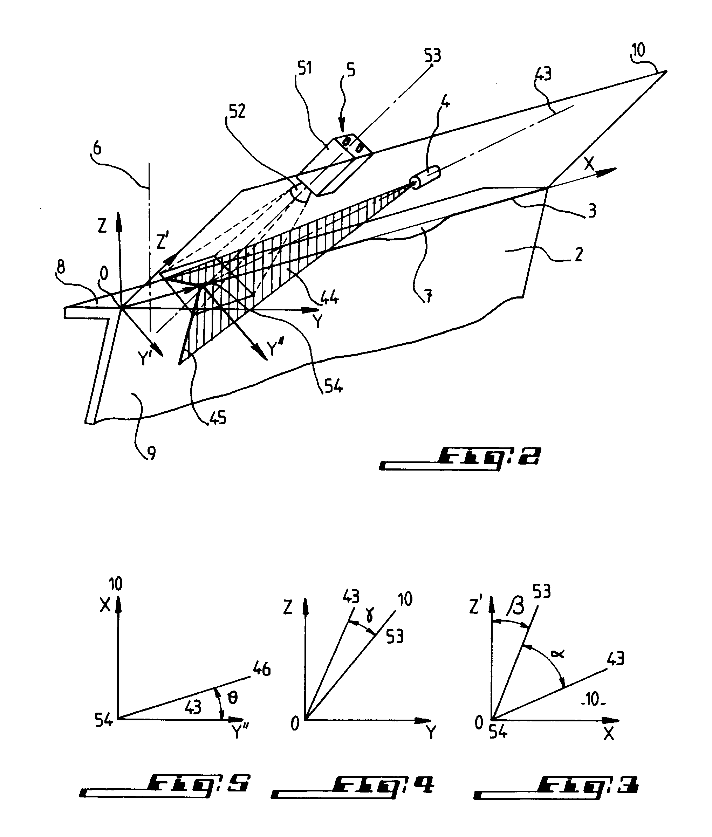

En se reportant maintenant à la figure 2, la position relative des différents organes qui ont été décrits plus haut va être expliquée plus en détail.

Sur cette figure, on a désigné par la référence numérique 7 une bavure qui est située sur l'arête 3 et que l'on désire éliminer avec l'outil 6. Cette arête 3 est formée par deux surfaces ou côtés 8 et 9 de la pièce 2, qui s'étendent de part et d'autre de leur plan bissecteur 10.

Afin de pouvoir plus aisément situer la position des différents organes nécessaires à l'exécution du procédé conforme à l'invention, nous allons maintenant décrire un répère orthonormé défini par trois axes X, Y, Z qui sont fixes par rapport à la pièce 2 à usiner.

L'axe X de ce repère s'étend suivant l'arête 3, qui a été choisie rectiligne dans l'exemple illustré. Il va de soit que cette arête peut être d'une forme quelconque et que le choix d'une arête rectiligne a été effectué pour simplifier la compréhension de l'invention. De plus, l'axe X est orienté dans le sens de l'avance à l'usinage, c'est-à-dire de gauche à droite sur la figure 2.

Le second axe Y du repère est perpendiculaire à l'axe de référence X, et est parallèle à la surface 8 de la pièce 2. Comme visible sur la figure 2, l'axe de référence Y est orienté vers l'extérieur de la pièce à usiner et forme une intersection avec l'axe X en un point d'origine 0, situé sur l'arête 3.

Le troisième axe du repère est désigné par la référence Z. Cet axe de référence Z est perpendiculaire au plan défini par les axes X et Y et est orienté vers l'extérieur de la pièce. Evidemment, l'axe Z est sécant aux axes X et Y au point d'origine 0. Sur la figure 2, on voit que l'axe de travail 6 de l'outil d'usinage est sensiblement parallèle à l'axe de référence Z.

On voit sur la figure 2, un deuxième repère orthonormé et centré sur le point d'origine 0. Ce deuxième repère et le repère X, Y, Z défini plus haut, ont en commun l'axe de référence X. Ce deuxième repère est défini par un axe Z′ qui est perpendiculaire à X et qui s'étend dans le plan bissecteur 10 de l'arête 3. L'axe de référence Z′ est orienté vers l'extérieur de la pièce 2.

La troisième dimension de ce repère est définie par un axe Y′ qui est perpendiculaire au plan défini par les axes X et Z′, c'est-à-dire normal au plan bissecteur 10 de l'arête 3. L'axe de référence Y′ croise les axes X et Z′ au point d'origine 0, et s'étend vers l'extérieur de la pièce 2, en s'éloignant de l'arête 3, de préférence au regard de l'une des deux surfaces 8 et 9 de la pièce 2, sur laquelle les bavures 7 sont les plus nombreuses. En effet, il convient de noter ici que les méthodes de fabrication comme le moulage par exemple, sont telles que les bavures apparaîssent plus fréquemment sur l'une des surfaces d'une arête que sur l'autre. Dans l'exemple illustré, les bavures 7 se trouvent principalement du côté de la surface 9 de l'arête 3.

La caméra matricielle 5 est représentée sur la figure 2 de façon schématique, par un boîtier de caméra 51 et un objectif 52. L'objectif 52 est orienté suivant un axe de mire 53 qui s'étend dans le plan bissecteur défini par les axes de référence X et Z′, et qui vient croiser l'arête 3 en un point 54 dit point de mire.

On comprend aisément qu'avec un axe de mire 53 qui est situé dans le plan bissecteur 10, la caméra matricielle 5 peut observer de façon égale les deux faces de l'arête 3.

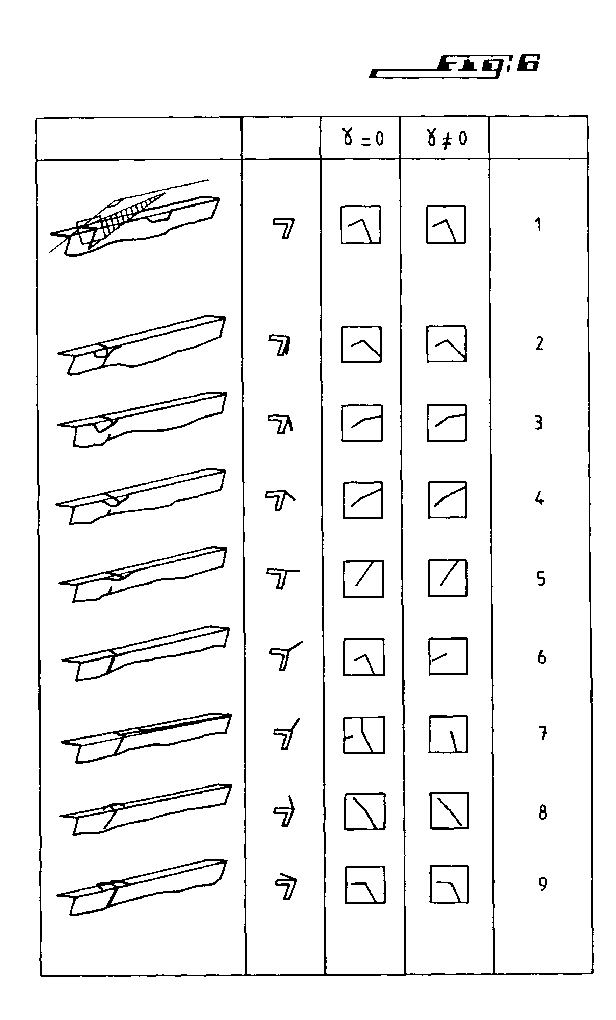

On a représenté sur la figure 3 les axes de référence X et Z′ qui définissent le plan bissecteur 10. Sur cette figure, on voit que l'axe de mire 53 est orienté dans le plan bissecteur 10 de façon à former un angle β non nul avec l'axe de référence Z′. L'angle β est l'angle de mire de l'axe 53 de la caméra 5. Avec un axe de travail 6 de l'outil d'usinage situé en aval, c'est-à-dire en arrière du point de mire 54 dans la direction de l'avance à l'usinage définie par l'orientation de l'axe de référence X, un tel angle de mire β permet d'obtenir une disposition plus compacte des organes d'observation et d'usinage sur le porte-outil 1. En plus de cette diminution de l'encombrement, l'angle de mire β permet de placer l'objectif 52 au plus près de l'axe de travail 6 de l'outil d'usinage. Il est également possible grâce à cet angle β, d'observer avec la caméra 5 un point situé au droit de l'axe de travail 6 de l'outil d'usinage, ou immédiatement en avant de celui-ci.

Sur la figure 2, on a représenté de façon schématique l'émetteur laser 4. L'émetteur laser 4 est orienté suivant un axe moyen de balayage qui est répéré en 43. L'axe moyen de balayage 43 est sécant avec l'axe de référence X au point de mire 54. Le faisceau projeté par l'émetteur laser 4 sur la pièce 2 peut être par exemple animé d'un mouvement de balayage d'amplitude limitée et suivant un va-et-vient rectiligne. Ce balayage permet d'obtenir un plan laser 44 qui éclaire la pièce 2 de part et d'autre de l'arête 3. Le plan laser 44 est défini par le secteur hachuré visible sur la figure 2, et forme avec la pièce 2 une trace 45.

Comme visible sur la figure 3, l'axe moyen de balayage 43 est orienté de façon que sa projection sur le plan bissecteur 10 qui est désignée par la même référence 43 forme avec l'axe de mire 53 de la caméra 5 un angle , dit angle de mise en relief.

Afin d'obtenir des images différentes en fonction des divers profils de l'arête 3 et des bavures 7, l'angle de mise en relief α doit impérativement être différent de zéro. En effet, si l'angle de mise en relief α était nul, l'axe moyen de balayage 43 et la trace 45 du plan laser 44 seraient dans un plan de symétrie de l'objectif 52 de la caméra 5, de sorte que la trace 45 serait perçue par la caméra de façon invariable, quel que soit le profil des bavures de l'arête 3. En d'autres termes, la caméra 5 percevrait une image ayant la forme d'une ligne droite ou d'un angle constant. On comprend facilement que l'angle permet de mettre en évidence le relief ou profil de l'arête 3. Il va de soi que plus l'angle α est important, plus le relief sera perçu de façon agrandie par la caméra 5. Pour ce faire, il convient de prévoir un angle de mise en relief α qui est compris entre 30 et 60°. On obtiendra un résultat optimum en choisissant de préférence un angle α de 45°.

En se reportant maintenant à la figure 5 sur laquelle est représenté l'axe de référence X qui est confondu avec l'arête 3 et un axe de référence Y˝ qui est l'axe parallèle à l'axe Y′ et qui passe par le point de mire 54, on voit que la trace du plan laser 44 sur le plan de référence défini plus haut est désignée par 46. Conformément à l'exemple illustré, cette trace 46 du plan laser 44 forme un angle θ dit angle d'anticipation , avec l'axe de référence Y˝. Il convient de noter ici que la trace 46 du plan laser 44 se trouve dans le quadrant défini par les axes de référence X et Y˝.

Cet angle θ permet d'anticiper la présence des bavures telles que celle désignée par 7 puisque la partie de la trace 46 la plus proche de l'arête 3 où sont formées les bavures 7 est la plus proche de l'outil 6. Ainsi, les bavures 7 qui sont situées dans le quadrant formé par X et Y˝ pourront être détectées avec une certaine avance.

En outre, cet angle d'anticipation θ permet d'obtenir un effet de loupe qui agrandit l'image des bavures que balaie le plan laser 44, puisque la trace 46 du plan laser sur une bavure 7 se projette sur une longueur plus étendue que la largeur de cette bavure.

La figure 4 représente un quadrant formé par les axes de référence Y et Z. Sur ce quadrant, on voit bien la section du plan bissecteur 10 qui est sensiblement confondue avec la projection de l'axe de mire 53 de la caméra 5 sur le plan formé par les axes Y et Z. On voit également la projection sur ce même plan de l'axe moyen de balayage 43 de l'émetteur laser 4. On remarque ici que les projections des axes de mire 53 et de balayage 43 forment un angle γ dit angle de contraste. Pour une bonne détection du profil de l'arête 3, il est indispensable que cet angle de contraste γ soit différent de zéro. Avec un angle γ nul, l'axe de mire 53 et l'axe de balayage 43 s'étendraient tous les deux dans un même plan, tel que par exemple le plan bissecteur 10, et il serait impossible de visualiser une bavure située dans ce plan. En effet, dans le cas où les axes 53 et 43 seraient compris dans le même plan passant par l'arête 3, une bavure s'étendant dans ce plan serait éclairée de façon uniforme par l'émetteur laser 4 et ne pourrait donc pas être perçue par la caméra 5.

C'est pourquoi il est souhaitable que l'axe moyen de balayage 43 de l'émetteur laser 4 soit orienté suivant un angle γ par rapport au plan bissecteur 10, cet angle permettant d'apporter du contraste à l'image perçue par la caméra 5. Le contraste est obtenu puisque l'émetteur laser 4 éclaire de préférence l'un des côtés de la bavure, ce qui projette une ombre sur l'une des faces 8 ou 9 de la pièce 2. Grâce à cet angle de contraste γ, la caméra 5 peut détecter des bavures, quelles que soient leurs positions par rapport à l'arête 3. L'angle de contraste γ entre la projection de l'axe de mire 53 et de l'axe moyen de balayage 43 est compris entre 1 et 10°, et est de préférence de l'ordre de 5°.

L'influence de l'angle de contraste γ sur l'image du profil de l'arête telle que perçue par la caméra 5 sera mieux comprise à la lecture du tableau visible sur la figure 6 dans la première colonne duquel sont illustrées de façon schématique des pièces 2 pouvant présenter des bavures 7 orientées de différentes façons.

La deuxième colonne du tableau de la figure 6 représente de façon schématique le profil de l'arête 3 de chaque pièce 2 représentée dans la première colonne . On remarque ici que la première ligne du tableau illustre le cas dans lequel l'arête 3 ne présente aucune bavure. Dans les lignes 2 à 5 du tableau, la pièce comporte une bavure qui s'étend dans le secteur inférieur au plan bissecteur 10. Le cas illustré par la ligne 6 du tableau est celui où la bavure s'étend suivant le plan bissecteur de l'arête. Les lignes 7 à 9 illustrent des cas où la bavure s'étend dans le secteur supérieur au plan bissecteur de l'arête.

Dans les troisième et quatrième colonnes du tableau sont représentées les images perçues par la caméra pour chacune des positions des bavures, avec un angle de contraste nul et différent de zéro, respectivement.

Il convient de noter ici que dans la troisième colonne qui correspond au cas où l'angle de contraste γ est égal à zéro, il est impossible de distinguer l'image perçue par la caméra 5 lorsque l'arête ne présente pas de bavure (ligne 1), de l'image perçue lorsque la bavure s'étend dans le plan bissecteur de l'arête (ligne 6).

Maintenant que toutes les positions décrites plus haut sont définies, nous allons pouvoir expliquer les étapes constituant le procédé conforme à l'invention.

Afin de régler automatiquement l'effort de coupe à appliquer à l'outil de coupe (représenté par son axe de travail 6) pour ébavurer l'arête 3 de la pièce 2, il convient tout d'abord que cette dernière soit fixée dans une position précise par rapport au robot R. Ce positionnement de la pièce 2 peut, par exemple, être effectué grâce à des moyens de blocage usuels, tel qu'un étau (non représenté). Un tel positionnement permet de définir les axes de référence X, Y, Z, Y′, Y˝ et Z′ qui ont été décrits plus haut.

Une fois la pièce 2 bloquée, l'outil est actionné, puis le bras B du robot est rapproché de la pièce 2, de sorte que le porte-outil 1 soit placé au regard d'une extrémité de l'arête 3 à usiner.

Le porte-outil 1 est alors placé de manière que le point d'origine 0 et le point de mire 54 soient confondus et situés à ladite extrémité de l'arête.

Le point de mire 54 et l'axe de travail 6 sont alors déplacés simultanément le long de l'arête 3, c'est-à-dire avec l'axe de travail 6 à l'arrière du point de mire 54, suivant la trajectoire d'avance à l'usinage. Dès que le point de mire 54 commence son déplacement, l'émetteur laser 4 éclaire la pièce 2 par exemple avec un mouvement de balayage rectiligne transversal à l'arête, de façon à former le plan laser 44 décrit plus haut.

La caméra matricielle 5 commence à ce moment-là son observation, et réalise une image de la trace 45 du plan laser 44 sur la pièce. Des exemples d'images perçues par la caméra matricielle 5 sont représentés dans les troisième et quatrième colonnes du tableau de la figure 6.

Cette image permet de visualiser le profil réel de l'arête à usiner de la pièce, c'est-à-dire de déceler la présence d'éventuelles bavures que l'on désire éliminer.

L'image réalisée par la caméra matricielle 5 est ensuite traitée par l'ordinateur (non représenté) qui gère le fonctionnement du robot R, afin d'analyser le profil visualisé. L'ordinateur exécute un programme de traitement approprié de cette image, pour détecter la présence des bavures 7.

Les données extraites de l'analyse du profil permettent de calculer une valeur appropriée des paramètres d'usinage, tels que l'avance et l'effort de coupe appliqués à l'outil 6.

Le déplacement de l'outil 6 est alors réglé en fonction des valeurs calculées précédemment, de sorte que l'on applique à l'outil 6 un effort de coupe optimal.

Bien sûr, une fois les étapes ci-dessus effectuées, celles-ci peuvent être recommencées suivant une boucle logique. Ainsi, le robot R peut constamment faire varier la valeur de l'effort de coupe appliqué à l'outil 6 de manière régulière, au fur et à mesure du déplacement de l'outil 6 le long de la trajectoire d'avance à l'usinage.

Le procédé de réglage automatique de l'effort appliqué à un outil pour l'ébavurage d'une arête peut comporter une étape supplémentaire consistant à augmenter l'effort de coupe lorsque l'image observée par la caméra est différente d'une image prédéterminée qui correspond au profil de l'arête en l'absence de bavures. Cette image prédéterminée peut par exemple être mémorisée par l'ordinateur, de manière à pouvoir être comparée avec l'image perçue lors du déplacement du point de mire 54 le long de l'arête. Grâce à cette étape, il est possible de réduire le temps nécessaire à l'ébavurage complet de la pièce, et ainsi de limiter le coût de cette opération.

On a donc obtenu conformément à l'invention un procédé de réglage automatique de l'effort de coupe à appliquer à un outil pour l'usinage d'une pièce, qui est rapide et efficace. De plus, ce procédé permet de limiter l'usure de l'outil en adaptant les paramètres d'usinage au profil réel de la pièce, et améliore le rendement du robot d'usinage en appliquant des paramètres de coupe optimaux en fonction de chaque pièce à usiner.

On comprend en outre qu'un robot existant peut être aisément équipé d'une caméra et d'un émetteur laser pour lui permettre d'exécuter le procédé décrit plus haut. De plus, l'utilisation d'un faisceau laser est particulièrement avantageuse en ce que celui-ci est insensible aux variations de lumière ambiante, ce qui permet d'obtenir un réglage précis de l'effort de coupe, quel que soit l'environnement de fonctionnement du robot.

## Revendications

1. Procédé de réglage automatique de l'effort de coupe à appliquer à un outil (6) monté sur un bras (B) d'un robot (R) et déplacé par celui-ci, suivant une trajectoire (X) d'avance à l'usinage, par exemple pour ébavurer une arête (3) sur une pièce (2), ledit réglage consistant à effectuer une analyse de la structure réelle de la pièce à usiner, calculer d'après l'analyse effectuée un effort de coupe approprié au profil (3) à usiner, et régler les paramètres de déplacement de l'outil (6) en fonction de l'effort de coupe ainsi calculé, caractérisé en ce qu'il comprend les étapes consistant à :
a)-éclairer la pièce (2) à usiner avec un faisceau lumineux produit par un émetteur laser (4), le faisceau ayant la forme d'un plan laser (44) et balayant la pièce de part et d'autre de la trajectoire d'avance à l'usinage;
b)-réaliser une image de la trace (45) du plan laser (44) sur la pièce (2) à l'aide d'une caméra (5), afin de visualiser le profil (3) à usiner de la pièce (2); et
c)-analyser l'image obtenue à l'étape (b) pour détecter la présence d'éventuelles bavures (7) sur le profil (3).

2. Procédé selon la revendication 1, caractérisé en ce que, le profil à usiner de la pièce (2) étant une arête (3) le long de laquelle peuvent se trouver des bavures à usiner, l'émetteur laser (4) et la caméra (5) sont orientés suivant des axes moyen de balayage (43) et de mire (53) respectivement, qui sont concourants en un point de l'arête (3), dit point de mire (54).

3. Procédé selon la revendication 1 ou 2,caractérisé en ce que l'axe de mire (53) de la caméra (5) est compris dans le plan bissecteur (10) de l'arête (3),afin de pouvoir visualiser de façon égale chacune des faces (8,9) de l'arête (3).

4. Procédé selon l'une des revendications 1 à 3, caractérisé en ce que l'axe de mire (53) de la caméra (5) et la projection de l'axe moyen de balayage (43) sur le plan bissecteur (10) forment un angle (α) non nul et dit de mise en relief.

5. Procédé selon la revendication 4, caractérisé en ce que l'angle de mise en relief (α) est compris entre 30 et 60°, et est de préférence de l'ordre de 45°.

6. Procédé selon l'une quelconque des revendications 1 à 5, caractérisé en ce que l'axe (43) de l'émetteur laser (4) et le plan bissecteur (10) de l'arête (3) forment un angle (γ) non nul et dit de contraste, afin de créer une zone d'ombre sur la face (9) de l'arête qui est opposée à cet angle (γ) si une bavure est présente.

7. Procédé selon la revendication 6, caractérisé en ce que ledit angle de contraste (γ) projeté sur un plan perpendiculaire à l'arête, est compris entre 1 et 10°, et est de préférence de l'ordre de 5°.

8. Procédé selon l'une quelconque des revendications 1 à 7, caractérisé en ce qu'un plan de référence est défini par un premier (X) et un second (Y˝) axes de référence, qui se croisent au point de mire (54), ledit premier axe de référence (X) étant confondu avec l'arête (3) et orienté dans le sens de l'avance à l'usinage, ledit axe de référence (Y˝) étant perpendiculaire d'une part audit premier axe (X) et d'autre part au plan bissecteur (10), et la trace du plan laser (44) sur ledit plan de référence s'étendant dans le quadrant défini par lesdits axes de référence (X, Y˝).

9. Procédé selon la revendication 8, caractérisé en ce que le deuxième axe de référence (Y˝) est orienté vers l'extérieur de la pièce (2) et s'étend d'un côté du plan bissecteur (10) qui présente une majorité des bavures (7) à usiner.

10. Procédé selon l'une quelconque des revendications 8 et 9, caractérisé en ce que la trace (46) du plan laser (44) sur ledit plan de référence et le deuxième axe de référence (Y˝), forment un angle (θ) d'anticipation et qui est de l'ordre de 30°.

11. Procédé selon l'une quelconque des revendications 1 à 10, caractérisé en ce que la caméra (5) et l'émetteur laser (4) sont montés sur le bras (B) du robot (R), à proximité de l'outil (6) et en avant de celui-ci par rapport à son sens de déplacement.

12. Procédé selon la revendication 11, caractérisé en ce que l'axe de mire (53) est incliné par rapport à l'axe (Z′) dans le plan bissecteur (10) d'un angle (β) dit de mire, de manière à pouvoir observer un point situé au droit de l'outil, ou immédiatement en avant de celui-ci, dans le sens de l'avance à l'usinage.

13. Procédé selon l'une quelconque des revendications 1 à 12, caractérisé en ce qu'il comprend une étape (e) supplémentaire, qui consiste à augmenter l'effort de coupe lorsque l'image observée par la caméra (5) est différente d'une image prédéterminée correspondant au profil de l'arête en l'absence de bavure (7).

## Patentansprüche

1. Vorrichtung zur automatischen Einstellung der an einem an einem Arm (B) eines Roboters (R) angeordneten und durch diesen entlang eines Bearbeitungsvorschubweges z.B. zum Entgraten einer Kante (3) an einem Werkstück (2) bewegten Werkzeug (6) anzuwendenden Schnittkraft, wobei die besagte Einstellung darin besteht, eine Untersuchung des tatsächlichen Gefüges des zu maschinell bearbeitenden Werkstückes durchzuführen, eine nach der durchgeführten Untersuchung für das maschinell zu bearbeitende Profil (3) geeignete Schnittkraft zu errechnen und die Verschiebungsparameter des Werkzeuges (6) in Abhängigkeit der somit errechneten Schnittkraft einzustellen, dadurch gekennzeichnet, dass es diejenigen Schritte aufweist, die darin bestehen :
a)- das maschinell zu bearbeitende Werkstück (2) mit einem durch einen Lasersender (4) erzeugten Lichtstrahlenbündel zu beleuchten, wobei das Strahlenbündel die Gestalt einer Laserebene (44) hat und das Werkstück beiderseits des Bearbeitungsvorschubweges abtastet ;
b) ein Bild der Spur (45) der Laserebene (44) auf dem Werkstück (2) mit Hilfe einer Kamera (5) zu schaffen, um das maschinell zu bearbeitende Profil (3) des Werkstückes (2) sichtbar zu machen ; und
c) das mit dem Schritt (b) erhaltene Bild zu analysieren, um das Vorhandensein von etwaigen Graten (7) an dem Profil (3) zu ermitteln.

2. Verfahren nach Anspruch 1, dadurch gekennzeichnet, dass, da das maschinell zu bearbeitende Profil des Werkstückes (2) ein Kante (3) ist, entlang welcher sich maschinell zu bearbeitende Graten befinden können, der Lasersender (4) und die Kamera (5) entlang jeweils der mittleren Abtastachse (43) und Visierachse (53), die an einem Punkt der Kante (3), sogenannten Visierpunkt (54) zusammenlaufen, ausgerichtet werden.

3. Verfahren nach Anspruch 1 oder 2, dadurch gekennzeichnet, dass die Visierachse (53) der Kamera (5) in der halbierenden Ebene (10) der Kante (3) liegt, um jede der Seitenflächen (8, 9) der Kante (3) in gleicher Weise sichtbar zu machen.

4. Verfahren nach einem der Ansprüche 1 bis 3, dadurch gekennzeichnet, dass die Visierachse (53) der Kamera (5) und die Projektion der mittleren Abtastachse (43) auf der halbierenden Ebene (10) einen Nichtnull-Winkel (α), sogenannten erhabenen Beschaffenheitswinkel bilden.

5. Verfahren nach Anspruch 4, dadurch gekennzeichnet, dass der erhabene Beschaffenheitswinkel (α) zwischen 30 und 60° liegt und vorzugsweise ungefähr 45° beträgt.

6. Verfahren nach irgendeinem der Ansprüche 1 bis 5, dadurch gekennzeichnet, dass die Achse (43) des Lasersenders (4) und die halbierende Ebene (10) der Kante (3) einen Nichtnull-sogenannten Kontrastwinkel (γ) bilden, um einen Schattenbereich auf derjenigen Seitenfläche (9) der Kante, die diesem Winkel (γ) entgegengesetzt ist, zu schaffen, wenn ein Grat vorhanden ist.

7. Verfahren nach Anspruch 6, dadurch gekennzeichnet, dass der besagte auf einer senkrecht zur Kante verlaufenden Ebene projektierte Kontrastwinkel (γ) zwischen 1 und 10° liegt und vorzugsweise der Grössenordnung von 5° ist.

8. Verfahren nach irgendeinem der Ansprüche 1 bis 7, dadurch gekennzeichnet, dass eine Bezugsebene durch eine erste und eine zweite Bezugsachse (X und Y"), die sich im Visierpunkt (54) kreuzen, bestimmt wird, wobei die besagte erste Bezugsachse (X) mit der Kante (3) zusammenfällt und in der Richtung des Bearbeitungsvorschubes gerichtet ist, wobei die besagte Bezugsachse (Y") senkrecht einerseits zu der besagten ersten Achse (X) und andererseits zu der halbierenden Ebene (10) verläuft und die Spur der Laserebene (44) auf der besagten Bezugsebene sich in dem durch die besagten Bezugsachsen (X, Y") begrenzten Quadrant erstreckt.

9. Verfahren nach Anspruch 8, dadurch gekennzeichnet, dass die zweite Bezugsachse (Y") nach aussen des Werkstückes (2) gerichtet ist und sich auf einer Seite der halbierenden Ebene (10), die eine Mehrheit der maschinell zu bearbeitenden Graten (7) aufweist, erstreckt.

10. Verfahren nach irgendeinem der Ansprüche 8 und 9, dadurch gekennzeichnet, dass die Spur (46) der Laserebene (44) auf der besagten Bezugsebene und die zweite Bezugsachse (Y") einen Vorausnahmewinkel (θ), der der Grössenordnung von 30° ist, bilden.

11. Verfahren nach irgendeinem der Ansprüche 1 bis 10, dadurch gekennzeichnet, dass die Kamera (5) und der Lasersender (4) an dem Arm (B) des Roboters (R) in der Nähe des Werkzeuges (6) und vor diesem in bezug auf seine Bewegungsrichtung angeordnet sind.

12. Verfahren nach Anspruch 11, dadurch gekennzeichnet, dass die Visierachse (53) in bezug auf die Achse (Z') in der halbierenden Ebene (10) um einen sogenannten Visierwinkel (β) geneigt ist, um einen auf der Lotrechten des Werkzeuges oder unmittelbar vor diesem in der Bearbeitungsvorschubrichtung gelegenen Punkt beobachten zu können.

13. Verfahren nach irgendeinem der Ansprüche 1 bis 12, dadurch gekennzeichnet, dass es einen zusätzlichen Schritt (e) aufweist, der darin besteht, die Schnittkraft zu erhöhen, wenn das durch die Kamera (5) beobachtete Bild sich von einem vorbestimmten dem Profil der Kante in Abwesenheit eines Grates (7) entsprechenden Bild unterscheidet.

## Claims

1. Method for the automatic control of the cutting force to be applied to a tool (6) mounted on one arm (B) of a robot (R) and displaced by the latter along a path (X) of feed during machining for example for deburring an edge (3) on a part (2), the said control consisting in effecting an analysis of the actual structure of the part to be machined, calculating after the effected analysis a cutting force suitable for the profile (3) to be machined and adjusting the parameters of the displacement of the tool (6) in accordance with the cutting force thus computed, characterized in that it comprises the steps consisting in :
(a) illuminating the part (2) to be machined with a light beam produced by a laser emitter (4), the beam having the shape of a laser plane (44) and sweeping across the part on either side of the path of feed during machining;
(b) providing an image of the trace (45) of the laser plane (44) on the part (2) with the assistance of a camera (5) in order to visualize the profile (3) to be machined of the part (2); and
(c) analysing the image obtained in the step (b) for detecting the presence of possible burrs (7) on the profile (3).

2. Method according to claim 1, characterized in that with the profile to be machined of the part (2) being an edge (3) along which there may be burrs to be machined, the laser emitter (4) and the camera (5) are directed along middle axes of sweeping (43) and of sight (53), respectively, which are convergingly meeting at a point of the edge (3), called the point of sight (54).

3. Method according to claim 1 or 2, characterized in that the axis of sight (53) of the camera (5) is comprised in the bisecting plane (10) of the edge (3) in order to allow to visualize in an equal manner each one of the faces (8, 9) of the edge (3).

4. Method according to one of claims 1 to 3, characterized in that the axis of sight (53) of the camera (5) and the projection of the middle axis of sweeping (43) upon the bisecting plane (10) form an angle (α) which is not zero and called angle of putting in relief.

5. Method according to claim 4, characterized in that the angle of putting in relief (α) is lying between 30 and 60° and is preferably of the order of 45°.

6. Method according to any one of claims 1 to 5, characterized in that the axis (43) of the laser emitter (4) and the bisecting plane (10) of the edge (3) form an angle (γ) which is not zero and called contrast angle in order to create a zone of shadow on that face (9) of the edge which is opposite to this angle (γ) if a burr is present.

7. Method according to claim 6, characterized in that the said contrast angle (γ) as projected upon a plane perpendicular to the edge is lying between 1 and 10° and is preferably of the order of 5°.

8. Method according to any one of claims 1 to 7, characterized in that a reference plane is defined by a first and a second reference axes (X and Y") which are crossing at the point of sight (54), the said first reference axis (X) coinciding with the edge (3) and being directed in the direction of feed during machining, the said reference axis (Y") being perpendicular on the one hand to the said first axis (X) and on the other hand to the bisecting plane (10) and the trace of the laser plane (44) upon the said reference plane extending in the quadrant defined by the said reference axes (X, Y").

9. Method according to claim 8, characterized in that the second reference axis (Y") is directed outwards of the part (2) and extends on one side of the bisecting plane (10) which exhibits a majority of burrs (7) to be machined.

10. Method according to any one of claims 8 and 9, characterized in that the trace (46) of the laser plane (44) upon the said reference plane and the second reference axis (Y") form an angle (θ) of anticipation which is of the order of 30°.

11. Method according to any one of claims 1 to 10, characterized in that the camera (5) and the laser emitter (4) are mounted onto the arm (B) of the robot (R) near the tool (6) and ahead thereof with respect to its direction of displacement;

12. Method according to claim 11, characterized in that the axis of sight (53) is inclined with respect to the axis (Z') in the bisecting plane (10) by an angle (β) called angle of sight so as to permit to observe a point located plumb with the tool or immediately ahead thereof in the direction of feed during machining.

13. Method according to any one of claims 1 to 12, characterized in that it comprises an additional step (e) which consists in increasing the cutting force when the image observed by the camera (5) differs from a predetermined image corresponding to the profile of the edge in the absence of any burr (7).
